Europäisches Patentamt

(19) European Patent Office

Office européen des brevets

(11) Numéro de publication: **0 208 608**
**B1**

(12) **FASCICULE DE BREVET EUROPÉEN**

(45) Date de publication du fascicule du brevet:
18.05.88

(21) Numéro de dépôt: **86401459.2**

(22) Date de dépôt: **01.07.86**

(51) Int. Cl.⁴: **B 64 C 27/00**

(54) **Dispositif de suspension antirésonnante à six degrés de liberté pour hélicoptère.**

(30) Priorité: **03.07.85 FR 8510157**

(43) Date de publication de la demande:
**14.01.87 Bulletin 87/3**

(45) Mention de la délivrance du brevet:
**18.05.88 Bulletin 88/20**

(84) Etats contractants désignés:
**DE GB IT**

(56) Documents cité:
**EP-A-0 034 092**
**US-A-4 372 431**

(73) Titulaire: **AEROSPATIALE Société Nationale Industrielle, 37, Boulevard de Montmorency, F-75781 Paris Cédex 16 (FR)**

(72) Inventeur: **Yana, Victor Yves, 37, Boulevard Perrin, F-13013 Marseille (FR)**

(74) Mandataire: **Barnay, André François, Cabinet Barnay 80 rue Saint- Lazare, F-75009 Paris (FR)**

## Description

La présente invention est relative à un dispositif de suspension antirésonnante multidirectionnelle de l'ensemble constitué par une boîte de transmission réductrice et un rotor de sustentation, pour un hélicoptère.

Dans un hélicoptère comprenant un fuselage et un groupe moteur, la force motrice provenant de celui-ci est reçue par une boîte de transmission formant réducteur ayant un arbre de sortie vertical portant le rotor et qui peut être reliée au fuselage par un dispositif de liaison élastique adapté pour absorber les vibrations imprimées au réducteur en service par le rotor.

On connait de nombreux dispositifs destinés à assurer le filtrage de ces vibrations entre l'ensemble rotor-réducteur.

US-A-4 372 431 décrit un isolateur de vibrations autour de six axes, comportant quatre masses d'inertie espacées de 90° dans le plan des axes de tangage et de roulis et montées élastiquement entre le support de la transmission d'un hélicoptère et le fuselage de celui-ci par l'intermédiaire d'un bras de support dont la section est variable pour régler sa rigidité.

Le brevet français de la demanderesse n° 2 499 505 a pour objet un dispositif dans lequel le réducteur est fixé par sa partie inférieure sur une membrane souple en flexion elle-même fixée sur le fuselage de l'hélicoptère, et comprenant plusieurs barres obliques de soutien dont les extrémités supérieures sont articulées au voisinage du sommet du réducteur et dont les extrémités inférieures sont reliées aux extrémités extérieures de bras flexibles de triangulation disposés radialement autour de la partie inférieure du réducteur. Ces bras flexibles sont fixés d'une part au fuselage par leur extrémité externe et d'autre part, par leur extrémité interne, à la partie inférieure du réducteur.

Chaque bras flexible de triangulation présente sur sa longueur une partie flexible et une partie rigide portant un levier à l'extrémité duquel est fixée une masse battante.

La membrane souple en flexion lie la partie inférieure du réducteur au fuselage pour transmettre de l'un à l'autre la réaction du couple d'entraînement du rotor en autorisant les mouvements d'oscillation et de translation verticale du réducteur par rapport au fuselage.

Bien que ces dispositifs de suspension antirésonnante se soient révélés particulièrement efficaces, on a trouvé qu'ils pouvaient cependant être encore améliorés et le but de l'invention est de réaliser un dispositif de ce type, de construction plus simple, à six degrés de liberté, permettant de filtrer toutes les excitations provenant du rotor et comportant un point de réglage unique qui est celui de la sollicitation en pompage, c'est-à-dire suivant l'axe vertical du rotor.

Par rapport au document FR-A-2 499 505 qui décrit déjà un dispositif de suspension antirésonnante de l'ensemble rotor de sustentation-réducteur sur le fuselage d'un hélicoptère du type dans lequel le réducteur est fixé au fuselage par quatre ensembles de moyens de triangulation et de bras de suspension identiques, régulièrement disposés autour de l'axe vertical du réducteur et décalés de 90° les uns par rapport aux autres, chaque bras de suspension présentant sur sa longueur une partie flexible isotrope et une partie rigide à laquelle est relié un levier comportant une masse battante, l'invention est caractérisée par les caractéristiques des parties caractérisantes des revendications 1 et 2, respectivement, selon une première et une deuxième solution.

La description qui va suivre en regard des dessins annexés à titre d'exemples non limitatifs, permettra de bien comprendre comment l'invention peut être mise en pratique.

La figure 1 est une vue en perspective d'un premier mode de réalisation du dispositif de suspension suivant l'invention.

La figure 2 est une vue analogue à celle de la figure 1 d'un second mode de réalisation de l'invention.

La figure 3 est une vue analogue d'un troisième mode de réalisation.

La figure 4 est une vue en coupe d'un palier lamifié sphérique de montage des extrémités d'une poutre flexible sur le fuselage de l'hélicoptère, ce palier étant également utilisé pour d'autres articulations du dispositif suivant l'invention.

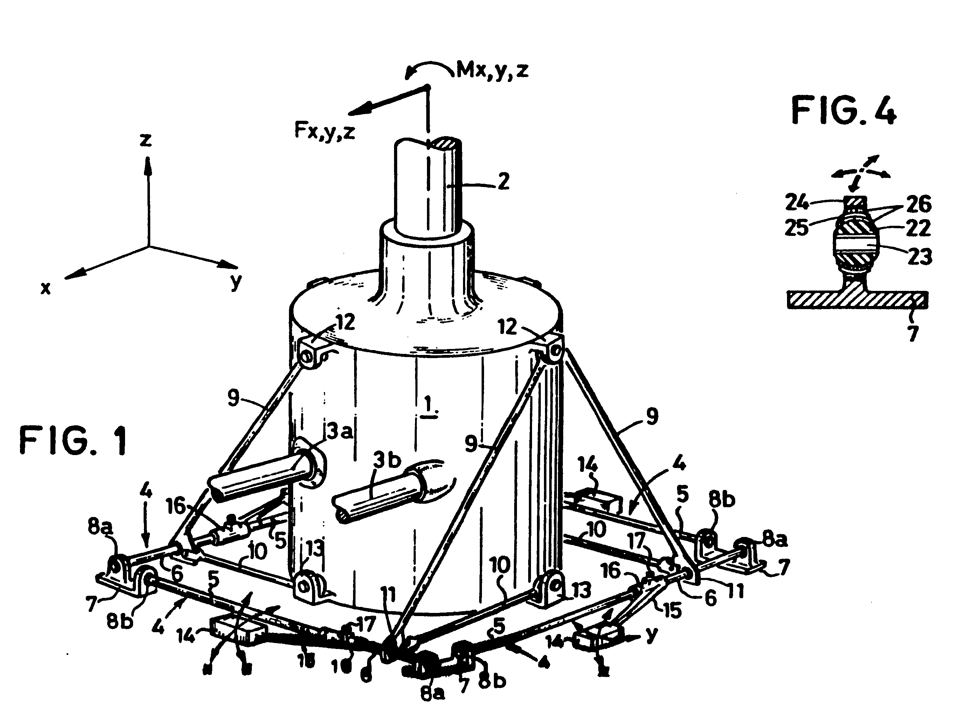

En se référant à la figure 1, on a représenté la boîte de transmission 1 formant réducteur pour l'entraînement d'un rotor de sustentation (non représenté) porté par un arbre vertical de sortie 2 du réducteur.

La force motrice est transmise à ce réducteur 1 par un ou deux arbres de transmission 3a, 3b reliés à un groupe moteur (non représenté).

Le dispositif de suspension suivant l'invention comprend, comme représenté, quatre ensembles identiques régulièrement disposés autour de l'axe vertical du réducteur 1 et décalés de 90° les uns par rapport aux autres.

Chacun de ces ensembles comprend une poutre flexible isotrope désignée dans son ensemble par la référence 4, ayant une portion souple 5 de section circulaire évolutive telle que les contraintes de flexion appliquées à cette poutre soient sensiblement constantes sur toute la longueur de cette portion, et une portion relativement rigide 6 de section circulaire.

La poutre 4 est fixée sur des points forts du fuselage (non représenté) de l'hélicoptère au moyen de ferrures 7 par l'intermédiaire de paliers lamifiés sphériques 8a, 8b du type représenté à la figure 4, l'extrémité de la portion rigide 6 étant fixe dans le palier 8a tandis que l'extrémité de la portion souple 5 peut coulisser longitudinalement dans le palier 8b.

Chaque poutre 4 est disposée espacée du réducteur 1 et perpeniiculaire à l'axe vertical de celui-ci.

Le réducteur 1 est relié à chaque poutre 4 par des moyens de triangulation rigides agencés pour transmettre les efforts et les moments du réducteur et qui, suivant le mode de réalisation représenté à la figure 1, sont constitués par deux barres 9, 10 formant respectivement l'hypoténuse et un côté de l'angle droit d'un triangle rectangle contenu dans un plan parallèle à l'axe vertical du réducteur et décalé latéralement par rapport à cet axe.

La barre 9 comporte à son extrémité inférieure une partie 11 formant chape dans laquelle est disposé un palier sphérique lamifié tel que représenté à la figure 4 et à travers lequel s'étend la portion rigide 6 de la poutre 4. L'extrémité opposée de la barre 9, formant l'hypoténuse du triangle, est articulée, au moyen d'un palier identique, dans une chape 12 prévue à la partie supérieure du corps du réducteur.

La barre 10 s'étend perpendiculairement à la poutre 4 et est fixée, par l'une de ses extrémités, formant chape, sur la partie 11 de la barre 9, tandis que son extrémité opposée est articulée sur le réducteur au moyen d'une chape 13 prévue à la partie inférieure du corps du réducteur, à la verticale de la chape 12, par l'intermédiaire d'un palier sphérique lamifié, une droite parallèle à l'axe vertical du réducteur et joignant les chapes 12 et 13 formant le second côté de l'angle droit du triangle rectangle délimité par les barres 9, 10.

Sur la portion relativement rigide 6 de chaque poutre 4 est montée une masse battante 14 fixée à une extrémité d'un bras rigide 15 solidaire d'un manchon 16 à partir duquel il s'étend obliquement, le manchon 16 étant monté coulissant sur la portion rigide 6, entre la partie d'extrémité 11 de la barre 9 et la portion souple 5, ce manchon pouvant ainsi être réglé en position et fixé par exemple au moyen d'une vis d'arrêt 17, ou autre moyen approprié, l'agencement étant tel que le bras 15 décale la masse battante 14 de la portion souple 5 de la poutre 4.

Cette masse battante 14 peut ainsi, sous les diverses sollicitations exercées par chaque paire de barres sur la poutre flexible 4, effectuer un mouvement angulaire dans une direction quelconque, autour d'un centre de rotation constitué par l'extrémité de la portion rigide 6 de la poutre, immobilisée dans le palier 8a.

L'ensemble constitué par la masse battante 14 et la portion souple 5 de la poutre joue ainsi le rôle de résonateur pour filtrer les excitations en provenance de la tête du rotor et transmises par chaque paire de barres 9, 10, quelle que soit la direction de ces excitations dans le plan délimité par chaque paire de barres.

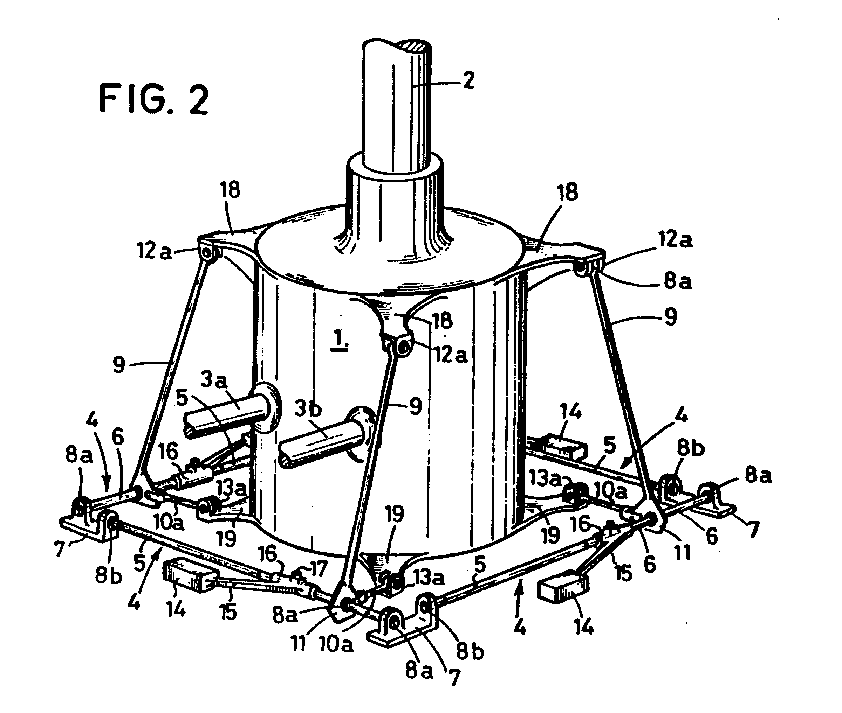

On a représenté à la figure 2 une première variante du dispositif décrit plus haut en référence à la figure 1. Dans cet exemple les chapes supérieure 12a et inférieure 13a sur lesquelles sont articulées respectivement chaque barre oblique 9 et chaque barre horizontale 10a sont toujours solidaires du corps du réducteur et sont toujours disposées sur une droite parallèle à l'axe du rotor mais, contrairement au mode de réalisation de la figure 1, ces chapes 12a, 13a sont fixées à l'extrémité de bras rigides 18, 19 respectivement, qui les éloignent du corps du réducteur 1. Il en résulte un raccourcissement de la barre inférieure 10a et une position moins inclinée de la barre oblique 9. Cette disposition des barres 9, 10a est avantageuse dans la mesure ou elle dégage mieux la périphérie du réducteur et permet d'installer plus facilement les organes annexes et, en particulier, les arbres parallèles 3a, 3b d'entrée dans le réducteur, dans le cas d'un hélicoptère bimoteur.

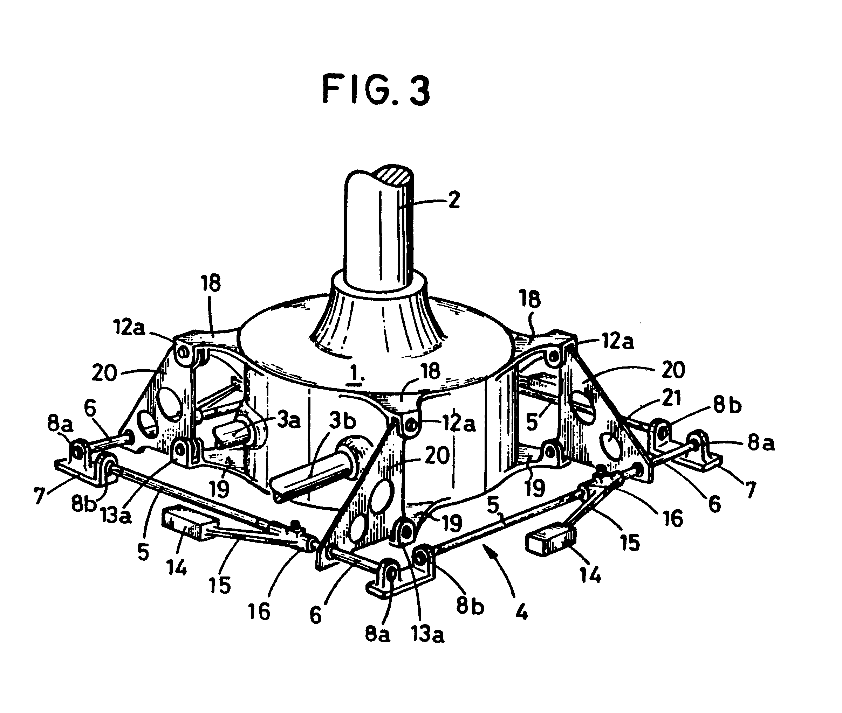

La figure 3 montre encore un autre mode réalisation du dispositif suivant l'invention dans lequel la barre oblique 9 constituant l'hypoténuse du triangle rectangle et la barre horizontale 10a du mode de réalisation de la figure 2 sont remplacées par une plaque rigide 20 ayant la forme d'un triangle rectangle dont chaque sommet est pourvu d'un palier sphérique lamfié et qui est disposée de telle sorte que le sommet de l'angle droit corresponde à la chape inférieure 13a fixée à l'extrémité du bras 19 du réducteur, tandis que l'extrémité du second côté de l'angle droit est reliée à la chape 12a à l'extrémité du bras 18 du réducteur.

Cette plaque triangulaire 20 est rigide dans son plan et transmet les efforts et les moments du corps du réducteur à la poutre flexible 4. Cette plaque 20 peut éventuellement comporter des trous d'allègement 21 dans sa partie centrale et des renforts (non représentés) sur les ailes qui correspondent aux côtés du triangle.

Cet agencement est particulièrement approprié pour les réducteurs de faible hauteur, en particulier ceux du type comportant un étage de réduction cylindrique de sortie au lieu des étages épicycloïdaux classiques.

La figure 4 mortre en coupe un palier lamifié d'un type connu particulièrement adapté pour être utilisé dans le dispositif suivant l'invention.

Ce palier comporte une rotule 22 percée d'un trou diamétral 23 et enfermée dans une chape 24 dans laquelle elle est maintenue au moyen d'une superposition alternée d'éléments annulaires sphériques 25 en une matière élastomère appropriée et de calottes sphériques métalliques 26 sur lesquelles ces éléments 25 sont collés.

La dynamique du dispositif de suspension suivant l'invention est la suivante:

a) sous l'une ou l'autre des excitations s'exerçant en Fx et My sur la tête de rotor, le réducteur subit un mouvement de tangage et de tamis longitudinal par rapport au fuselage;

b) sous l'une ou l'autre des excitations s'exerçant en Fy et Mx sur la tête de rotor, le réducteur est soumis à un mouvement de roulis et de tamis latéral par rapport au fuselage;

c) sous l'excitation s'exerçant en Fz sur la tête de rotor, le réducteur est soumis à un moment de pompage par rapport au fuselage;

d) sous une excitation s'exerçant en Mz sur la tête de rotor, le réducteur est soumis à un mouvement de lacet par rapport au fuselage.

Grâce au dispositif de suspension suivant l'invention, le réducteur présente six degrés de liberté par rapport au fuselage et sa cinématique est la suivante:

1. le pompage vertical du réducteur sollicite verticalement les quatre poutres flexibles 4 et les quatre masses battantes 14;

2. le roulis du réducteur sollicite verticalement les quatre poutres flexibles 4 et les quatre masses battantes 14;

3. le tangage du réducteur sollicite verticalement les quatre poutres flexibles 4 et les quatre masses battantes 14;

4. le mouvement de tamis longitudinal du réducteur sollicite horizontalement les deux poutres flexibles 4 qui sont perpendiculaires à l'axe longitudinal et les deux masses 14 montées sur ces deux poutres;

5. le mouvement de tamis latéral du réducteur sollicite horizontalement les deux poutres flexibles 4 qui sont perpendiculaires à l'axe latéral et les deux masses 14 montées sur ces deux poutres;

6. le mouvement de lacet du réducteur (reprise de la réaction du couple moteur, statique et dynamique) sollicite horizontalement les quatre poutres flexibles et les quatre masses battantes 14.

On comprend que dans le dispositif suivant l'invention, les moyens pour transmettre aux poutres flexibles les efforts et les moments du réducteur sont articulés sur celui-ci en des points situés aux extrémités de deux diamètres orthogonaux de celui-ci et s'étendent sensiblement perpendiculairement à ces diamètres et aux poutres et travaillent par conséquent en poussée ou en traction dans leur propre plan, tangentiellement par rapport au corps du réducteur.

Le réglage dynamique de l'ensemble de la suspension est réalisé uniquement suivant la direction verticale, c'est'-à-dire en pompage. Ce réglage par un point unique est rendu possible par le fait que les quatre résonateurs constitués chacun de la partie souple 5 de la poutre flexible 4 et de la masse battante 14 ont le même fonctionnement quelle que soit la direction radiale de l'excitation exercée sur eux. En effet, la partie souple 5 est de section circulaire donc isotrope, et la masse battante peut osciller angulairement à l'intérieur d'un cône dont le sommet est le centre du palier sphérique 8a. En conséquence, les six mouvements possibles du réducteur par rapport au fuselage conduisant à des excitations verticales ou horizontales des quatre résonateurs, sont filtrés de façon équivalente quelle que soit la direction de l'excitation.

Le fonctionnement en pompage étant donc représentatif du principe de fonctionnement général des résonateurs et de l'excitation en pompage ainsi que la mesure de filtrage correspondant étant des plus simples à réaliser en laboratoire et en atelier, c'est donc le réglage en pompage qui est choisi pour régler la suspension dans son ensemble.

Les poutres flexibles 4 sont de préférence réalisées en un matériau composite de fibres unidirectionnelles à haute résistance, par exemple des fibres de verre ou de Kevlar agglomérées au moyen d'une résine synthétique thermodurcissable. Ces poutres peuvent également être réalisées en métal, par exemple en titane.

La portion souple 5 de chaque poutre flexible 4 présente une section circulaire à profil évolutif tel que les contraintes de flexion soient constantes sur toute la longueur de cette portion.

On remarquera que le dispositif suivant l'invention permet de supprimer la membrane utilisée dans le brevet précité de la demanderesse ainsi que dans d'autres dispositifs et sur laquelle est fixé le réducteur, permettant ainsi une fabrication simplifiée et un allègement du plancher qui constitue la structure supérieure du fuselage du giravion.

## Revendications

1. Dispositif de suspension antirésonnante de l'ensemble rotor de sustentation-réducteur sur le fuselage d'un hélicoptère du type dans lequel le réducteur (1) est fixé au fuselage par quatre ensembles de moyens de triangulation (9, 10, 10a) et de bras de suspension (poutres flexibles isotropes 4) identiques, régulièrement disposés autour de l'axe vertical du réducteur et décalés de 90° les uns par rapport aux autres, chaque bras de suspension présentant sur sa longueur une portion souple (5) et une portion rigide (6) à laquelle est relié un levier (15) comportant une masse battante (14), caractérisé en ce que:

- chaque ensemble de moyens de triangulation reliant le réducteur (1) à chaque bras de suspension (4) est constitué par deux barres (9, 10) disposées dans un plan parallèle à l'axe vertical du réducteur et décalé par rapport à ce dernier et qui délimitent un triangle rectangle dont l'hypoténuse s'étend dudit bras de suspension à la partie supérieure du réducteur et dont un côté de l'angle droit s'étend dudit bras à la partie inférieure du réducteur,

- les extrémités desdites barres de triangulation sont fixées sur ledit réducteur par des articulations autorisant un débattement angulaire de chaque ensemble de barres de triangulation autour de l'axe parallèle à l'axe vertical du réducteur défini par les deux points d'articulation desdites barres sur le fuselage,

- la liaison de chaque ensemble de deux barres de triangulation sur le bras de suspension (4) correspondant est réalisée par des articulations à rotule autorisant un débattement angulaire de ladite liaison dans une direction quelconque autour du centre de rotation de façon à transmettre au bras de suspension uniquement des efforts parallèles au plan défini par chaque ensemble de barres de triangulation.

2. Dispositif de suspension antirésonnante de l'ensemble rotor de sustentation-réducteur sur le

fuselage d'un hélicoptère du type dans lequel le réducteur (1) est fixé au fuselage par quatre ensembles de moyen de triangulation (20) et de bras de suspension (poutres flexibles isotropes 4) identiques, régulièrement disposés autour de l'axe vertical du réducteur et décalés de 90° les uns par rapport aux autres, chaque bras de suspension présent sur sa longueur une portion souple (5) et une portion rigid (6) à laquelle est relié un levier (15) comportant une masse battante (14), caractérisé en ce que:

- chaque ensemble de moyens de triangulation reliant le réducteur (1) à chaque bras de suspension (4) est constitué par une plaque rigide (20) disposée dans un plan parallèle à l'axe vertical du réducteur et décalé par rapport à ce dernier, ladite plaque rigide ayant la forme d'un triangle rectangle dont l'hypoténuse s'étend dudit bras de suspension à la partie supérieure du réducteur et dont un côté de l'angle droit s'étend dudit bras à la partie inférieure du réducteur, - deux angles de ladite plaque triangulare rigide sont fixés sur le réducteur par des articulations (12a, 13a) autorisant un débattement angulaire de la plaque autour de l'axe parallèle à l'axe vertical du réducteur défini par les deux points d'articulation de la plaque triangulaire sur le fuselage,

- la liaison de la plaque triangulaire sur le bras de suspension crrespondant est réalisée par une articulation à rotule autorisant un débattement angulaire de ladite liaison dans une direction quelconque autour du centre de rotation de façon à permettre au bras de suspension uniquement des efforts parallèles au plan défini par chaque plaque triangulaire.

3. Dispositif suivant l'une ou l'autre des revendications 1 et 2, caractérisé en ce que les moyens de triangulation sont reliés au bras de que suspension correspondant et au réducteur (1) par des articulations à rotules constituées de préférence par des paliers sphériques lamifiés.

4. Dispositif suivant l'une ou l'autre des revendications 1 et 2, caractérisé en ce que chaque masse battante (14) est montée à une extrémité d'un levier support rigide (15) s'étendant obliquement à partir de la portion rigide (6) du bras de suspension, ledit levier support de masse étant réglable suivant la longueur de ladite portion rigide.

5. Dispositif suivant l'une quelconque des revendications 1 à 4, caractérisé en ce que lesdits moyens de triangulation sont fixés directement sur le carter du réducteur (1).

6. Dispositif suivant l'une quelconque des revendications 1 à 4, caractérisé en ce que lesdits moyens de triangulation sont fixés sur le réducteur (1) par l'intermédiaire de bras (18, 19) rigidement solidaires du carter du réducteur.

**Patentansprüche**

1. Antiresonanzaufhängungsvorrichtung des gesamten Rotorauftriebsuntersetzungsgetriebes auf dem Rumpf eines Hubschraubers, bei welchem das Untersetzungsgetriebe (1) auf dem Rumpf durch vier Baueinheiten aus Dreipunktaufnahmemitteln (9, 10, 10a) und durch Tragarme (flexible dehnbare Träger 4) befestigt ist, die einander gleich, ferner gleichmäßig um die vertikale Achse des Untersetzungsgetriebes verteilt und um 90° gegeneinander versetzt angeordnet sind, wobei jeder Tragarm in seiner Längsrichtung einen elastischen Bereich (5) und einen starren Bereich (6) aufweist und in letzterem ein Hebel (15) angeschlossen ist, der eine Schwingungsmasse (14) trägt, dadurch gekennzeichnet, daß:

- jede das Untersetzungsgetriebe (1) mit jedem Tragarm (4) verbindende Baueinheit der Dreipunktaufnahmemittel von zwei Stäben (9, 10) gebildet ist, die in einer zur vertikalen Achse des Untersetzungsgetriebes parallelen Ebene und gegenüber dieser versetzt angeordnet sind und die ein rechtwinkliges Dreieck begrenzen, dessen Hypotenuse sich von dem besagten Tragarm bis zu dem oberen Teil des Untersetzungsgetriebes erstreckt und dessen einer Schenkel des rechten Winkels sich von dem besagten Tragarm zu dem unteren Bereich des Untersetzungsgetriebes erstreckt,

- die Enden der genannten Stäbe der Dreipunktaufhängung an dem Untersetzungsgetriebe durch Gelenke befestigt sind, die eine Winkelverstellung von jeder Gruppe von Stäben der Dreipunktaufhängung um die zur senkrechten Achse des Untersetzungsgetriebes parallele Achse ermöglichen, die durch die beiden Gelenkpunkte der Stäbe an dem Rumpf bestimmt ist,

- die Verbindung von jeder Gruppe der beiden Stäbe der Dreipunktaufhängung an dem jeweiligen Tragarm (4) von Gelenklagern gebildet ist, die eine Winkelverstellung dieser Verbindung in einer beliebigen Richtung um den Drehmittelpunkt erlauben, so daß auf den Tragarm nur die zu der von jeder der Gruppe von Stäben der Dreipunktaufhängung bestimmten Ebene parallelen Kräfte übertragen werden.

2. Antiresonanzaufhängungsvorrichtung des gesamten Rotorauftriebsuntersetzungsgetriebes auf dem Rumpf eines Hubschraubers, bei welchem das Untersetzungsgetriebe (1) auf dem Rumpf durch vier Baueinheiten aus Dreipunktaufnahmemitteln (9, 10, 10a) und durch Tragarme (flexible dehnbare Träger 4) befestigt ist, die einander gleich, ferner gleichmäßig um die vertikale Achse des Untersetzungsgetriebes verteilt und um 90° gegeneinander versetzt angeordnet sind, wobei jeder Tragarm in seiner Längsrichtung einen- elastischen Bereich (5) und einen starren Bereich (6) aufweist und in letzterem ein Hebel (15) angeschlossen ist, der eine Schwingungsmasse (14) trägt, dadurch gekennzeichnet, daß:

- jede das Untersetzungsgetriebe (1) mit jedem Tragarm (4) verbindende Baueinheit der Dreipunktaufnahmemittel von einer starren Platte (20) gebildet ist, die in einer zur vertikalen Achse des Untersetzungsgetriebes parallelen Ebene und gegenüber dieser versetzt angeordnet ist und die die Form eines rechtwinkligen Dreiecks aufweist, dessen Hypotenuse sich von dem besagten Tragarm bis zu dem oberen Teil des Untersetzungsgetriebes erstreckt und dessen einer Schenkel des rechten Winkels sich von dem besagten Tragarm zu dem unteren Bereich des Untersetzungsgetriebes erstreckt,

- zwei Ecken der genannten dreieckigen starren Platte der Dreipunktaufhängung an dem Untersetzungsgetriebe durch Gelenke befestigt sind, die eine Winkelverstellung der Platte um die zur senkrechten Achse des Untersetzungsgetriebes parallele Achse ermöglichen, die durch die beiden Gelenkpunkte der dreieckigen Platte an dem Rumpf bestimmt ist,

- die Verbindung der dreieckigen Platte an dem jeweiligen Tragarm (4) durch ein Gelenklager gebildet ist, das eine Winkelverstellung dieser Verbindung in einer beliebigen Richtung um den Drehmittelpunkt erlaubt, so daß auf den Tragarm nur die zu der von jeder dreieckigen Platte bestimmten Ebene parallelen Kräfte übertragen werden.

3. Vorrichtung nach einem der Ansprüche 1 oder 2, dadurch gekennzeichnet, daß die Dreipunktaufnahmemittel an den entsprechenden Tragarm und an das Untersetzungsgetriebe (1) durch Gelenklager angeschlossen sind, die vorzugsweise von Kugellagern gebildet sind.

4. Vorrichtung nach einem der Ansprüche 1 oder 2, dadurch gekennzeichnet, daß jede Schwingungsmasse (14) an dem Ende eines starren Trägerhebels (15) befestigt ist, der von dem starren Bereich (6) des Tragarms ausgehend schräg verläuft, wobei der Trägerhebel für die Masse entsprechend der Länge des genannten starren Bereichs einstellbar ist.

5. Vorrichtung nach einem der Ansprüche 1 bis 4, dadurch gekennzeichnet, daß die Dreipunktaufnahmemittel direkt am Gehäuse des Untersetzungsgetriebes angeschlossen sind.

6. Vorrichtung nach einem der Ansprüche 1 bis 4, dadurch gekennzeichnet, daß die Dreipunktaufnahmemittel am Untersetzungsgetriebe (1) über am Gehäuse des Untersetzungsgetriebes feste starre Arme (18, 19) befestigt sind.

**Claims**

1. Antiresonant suspension system for the lift rotor/gearbox assembly on the fuselage of a helicopter of the type in which the gearbox (1) is fixed to the fuselage by four triangulation means assemblies (9, 10, 10a) and identical suspension arms (isotropic flexible struts 4) regularly disposed about the vertical axis of the gearbox and displaced by 90° with respect to one another, each suspension arm having along its length a flexible portion (5) and a rigid portion (6) to which is connected a lever (15) comprising an inertial mass (14), characterised in that:

each triangulation means assembly connecting the gearbox (1) to each suspension arm (4) comprises two rods (9, 10) disposed in a plane parallel to the vertical axis of the gearbox and displaced with respect to the latter and defining a right-angled triangle, the hypotenuse of which extends from the suspension arm to the upper part of the gearbox and one side of the right-angle of which extends from such arm to the lower part of the gearbox,

the ends of the triangulation rods are fixed to the gearbox by articulations allowing angular movement of each assembly of the triangulation rods about the axis parallel to the vertical axis of the gearbox defined by the two points of articulation of the rods to the fuselage,

connection of each assembly of two triangulation rods to the corresponding suspension arm (4) is effected by rotational articulations allowing angular movement of such connection in any desired direction about the centre of rotation in order to transmit to the suspension arm solely forces parallel to the plane defined by each triangulation rod assembly.

2. Antiresonant suspension system for the lift rotor/gearbox assembly on the fuselage of a helicopter of the type in which the gearbox (1) is fixed to the fuselage by four triangulation means assemblies (20) and identical suspension arms (isotropic flexible struts 4) regularly disposed about the vertical axis of the gearbox and displaced by 90° with respect to one another, each suspension arm having along its length a flexible portion (5) and a rigid portion (6) to which is connected a lever (15) comprising an inertial mass (14), characterised in that:

each triangulation means assembly connecting the gearbox (1) to each suspension arm (4) comprises a rigid plate (20) disposed in a plane parallel to the vertical axis of the gearbox and displaced with respect to the latter, the rigid plate having the form of a rightangled triangle, the hypotenuse of which extends from the suspension arm to the upper part of the gearbox and one side of the right-angle of which extends from such arm to the lower part of the gearbox,

two corners of the rigid triangular plate are fixed to the gearbox by articulations (12a, 13a) allowing angular movement of the plate about the axis parallel to the vertical axis of the gearbox defined by the two points of articulation of the triangular plate to the fuselage,

connection of the triangular plate to the corresponding suspension arm is effected by a rotary articulation allowing angular movement of the connection in any desired direction about the centre of rotation in order to allow the suspension arm to receive only forces parallel to the plane defined by each triangular plate.

3. System according to one or other of claims 1 and 2, characterised in that the triangulation means are connected to the corresponding suspension arm and to the gearbox (1) by rotary articulations preferably comprising laminated spherical bearings.

4. System according to one or other of claims 1 and 2, characterised in that each inertial mass (14) is mounted on an end of a rigid support lever (15) extending obliquely from the rigid portion (6) of the suspension arm, the mass support lever being adjustable along the length of the rigid portion.

5. System according to any of claims 1 to 4, characterised in that the triangulation means are fixed directly to the housing of the gearbox (1).

6. System according to any of claims 1 to 4, characterised in that the triangulation means are fixed to the gearbox (1) through the intermediary of arms (18, 19) rigidly connected to the housing of the gearbox.

FIG. 1

FIG. 4

Mx,y,z

Fx,y,z

z

x

y

2

12        12

9        9

9

3a

3b

1

14        4

4        5   8b

16        10   17

8a        8a

5        7

4        10        7

6   5        13        16   11

7        1        14        6

8b        11        15

4   14        5

17        y

18   16        14

8a   7   8b

24        26

25        22

23

7

0 208 608

FIG. 2

FIG. 3